(19) Europäisches Patentamt
European Patent Office
Office européen des brevets

(11) EP 2 873 854 A1

(12) **EUROPEAN PATENT APPLICATION**

(43) Date of publication:
**20.05.2015 Bulletin 2015/21**

(51) Int Cl.:
***F03D 11/00*** *(2006.01)*

(21) Application number: **13192881.4**

(22) Date of filing: **14.11.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Siemens Aktiengesellschaft**
**80333 München (DE)**

(72) Inventor: **Frydendal, Ib**
**6683 Føvling (DK)**

# (54) Method to determine a distance between a tower wall and a wind turbine blade

(57) The invention relates to a method to determine a distance between an exterior wall of a wind turbine tower and a tip end of a wind turbine blade.

According to the method invented the distance between an exterior wall of a wind turbine tower and a tip end of a wind turbine blade is determined by using a laser range line measurement device. This laser range line measurement device is positioned in front of the tower in a way that a measurement field for distance measurements is established between the measurement device and the exterior wall of the tower.

The tip end of the blade, which rotates with the hub around a rotational axis, passes the measurement field in a region. A first distance is measured, which defines the distance between the measurement device and the exterior wall of the tower. A second distance is measured, which defines the distance between the measurement device and the tip end of the blade. The distance between the exterior wall of the tower and the tip end of the blade is calculated by subtracting the measured distances.

FIG 1
WT
B3
ROT
H
N
SMALL DEFLECTION
LARGE DEFLECTION
B2
B1
T
REG
MF
distance measurement; LOS
Laser range line measurement device
distance MD → tip end of B2 ≙ distance 2
MD
EW
distance MD → tower wall ≙ distance 1

EP 2 873 854 A1

## Description

The invention relates to a method to determine a distance between an exterior wall of a wind turbine tower and a tip end of a wind turbine blade.

New types of wind turbine blades need to be verified in regard to their deflection and in particular in regard to the so called "tip to tower"-distance while the blade is in operation.

The tip to tower distance is quite important for the type-approval process of new turbine blades. The blades are turning around an axis, which is substantially horizontal or which is inclined by a given angle in reference to a horizontal axis.

Each blade of the wind turbine is exposed to a certain wind force, thus the tip end of the blade is bent towards the exterior wall of the tower. The angle of the axis of rotation in reference to the horizontal axis is chosen based on the blade-properties, i.e. based on the blade-bending towards the tower.

It is known to determine the tip to tower distance by images of the tip end of turning blades. The images are taken from a cross wind direction, thus the tip to tower distance and even the diameter of the tower can be seen directly on those images. The diameter of the tower is known, thus it can be used for scaling purposes in the images. Based on the scaling the tip to tower distance as shown on the pictures can be calculated with a good precision.

For this calculation the images must be taken by a camera from a position, which is precisely within the rotor plane, while the rotor plane is defined by the rotor blades.

This rotor plane will be changed by the yaw-system of the wind turbine again and again, as the yaw-system adjusts the nacelle and thus the rotor and the rotor-plane of the wind turbine into the direction of the wind. Thus the yaw-system optimises the generation of power of the wind turbine.

Due to this yawing-movement of the nacelle even the position of the camera needs to be moved again and again. This change in the measurement-setup is time consuming, the measurements themselves might be unrepeatable due to the change of the camera position and the accuracy of the measurements might be scaled down by the readjustment of the measurement camera setup.

It is therefore the aim of the invention, to achieve an improved and easy method to determine the distance between the tower wall and the tip end of the wind turbine blade.

This aim is reached by the features of claim 1. Preferred embodiments are addressed by the dependent claims.

According to the method invented the distance between an exterior wall of a wind turbine tower and a tip end of a wind turbine blade is determined by using a laser range line measurement device. This laser range line measurement device is positioned in front of the tower in a way that a measurement field for distance measurements is established between the measurement device and the exterior wall of the tower.

The tip end of the blade, which rotates with the hub around a rotational axis, passes the measurement field in a region being part of the measurement field.

A first distance is measured, which defines the distance between the measurement device and the exterior wall of the tower. A second distance is measured, which defines the distance between the measurement device and the tip end of the blade. The distance between the exterior wall of the tower and the tip end of the blade is calculated by subtracting the measured distances.

In a preferred configuration the measurement field is positioned vertically along the tower.

In a preferred configuration the laser range line measurement device is positioned on the ground and in an upwind position in reference to the tower and the turning blade. The laser range line measurement device is positioned in a plane, which is defined by the longitudinal axis of the nacelle and the hub of the wind turbine and which is even defined by the longitudinal axis of the tower.

In a preferred configuration the distance measurements are carried out by a number of laser range line measurement devices, which are arranged on a line.

In a preferred configuration the second distance is measured with a predetermined resolution and as long as the tip end of the blade passes the region. The predetermined resolution is chosen in a way that the blade-geometry is derivable from the distance measurements.

In a preferred configuration the blade-geometry, which is derived from the measurements, is evaluated to detect blade-damages, being originated by lightning strikes or hail or icing or rain or other ambient influences.

In a preferred configuration the blade-geometry, which is derived from the measurements, is evaluated to detect blade geometries, which contribute to noise emissions.

In a preferred configuration the blade-geometry, which is derived from the measurements, is evaluated to detect tower shadow blade deflections.

In a preferred configuration the second distance is measured with a predetermined resolution and as long as the tip end of the blade passes the region. The predetermined resolution is chosen in a way that the pitch angle of the rotating blade is derivable from the distance measurements. A pre-known geometry of the blade might be used for this purpose, too.

The method invented is quite accurate and is even quite cheap as already known laser range line measurement devices are used in the method invented as a fundamental part.

The method invented is robust and accurate in view to a yaw movement or in view to a yaw-misalignment of the nacelle of the wind turbine. The measurements might only be "disturbed" by the cosine of a misalignment angle - i.e. a misalignment of 10° might change the distances measured by only 1.5%.

The method invented is very robust in regard to a terrain slope as the distance between the measurement device and the tower is measured and used as a reference to determine the tip-to-tower-distance.

In a preferred embodiment the measurement principle as described above is designed for typical tip to tower distance measurements.

However in another preferred embodiment the measurement principle might be used to determine the relative pitch angle of the turning blades indirectly. The relative blade pitch angle of each blade can be easily determined as the blades of the wind turbine are passing the measurement region.

For this purpose tip-to-tower-distances, based on a number of blades-passages, are measured and a mean value of the measurements is calculated based on this. An "analysis of variance" might be done to get a mean value of a tip to tower distance for each rotor blade.

With a sufficient high sample rate and based on a certain kind of a pre-known blade-geometry the pitch angle of each blade can be derived from the these measurements.

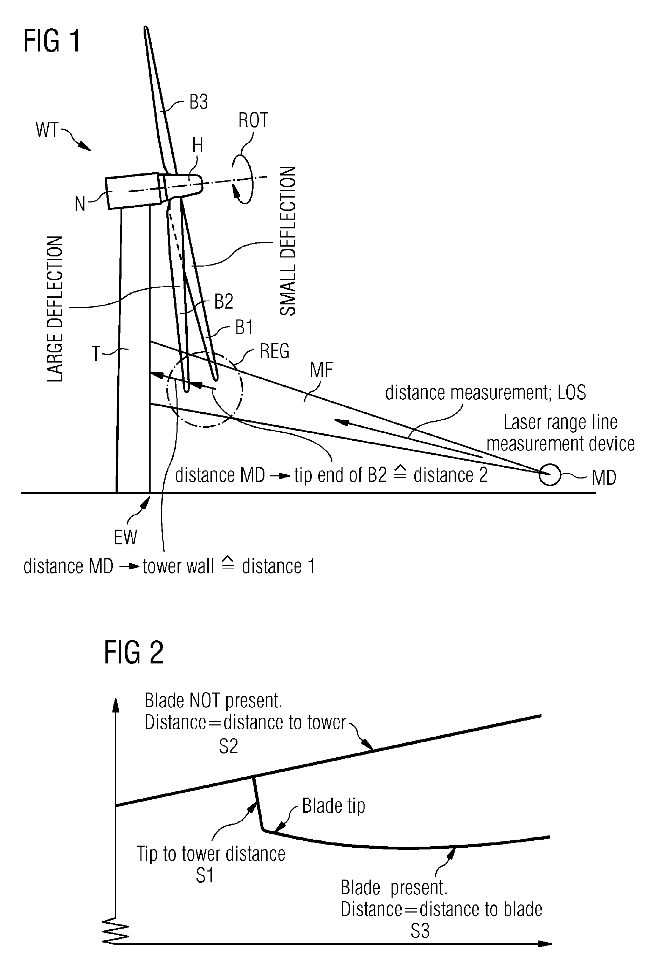

With a sufficiently high sample rate even the blade geometry (as later described in FIG 2) of the pressure side of the blades may be obtained from the tip end measurements.

The method invented is used for:

- The determination of the respective blade pitch angle by comparing blade-geometries.
- The determination and evaluation of damages of the blades, i.e. due to lightning, hail and rain.
- The determination of an abnormal blade-geometry, which originates abnormal noise.
- The determination of tower shadow blade deflections if the laser range line measurement device is arranged in a horizontal direction in reference to the tower. Thus this knowledge could contribute to improve tower shadow load calculation models being used.

As an alternative to the described "one laser line measurement", the measurement may be carried out with a number of laser range point measurements on a line. Even though this reduces the resolution of measurement along the line of measurement it may provide a sufficient resolution and a higher sampling rate.

The invention is shown in more detail by help of figures. The figures show preferred embodiments and shall not limit the scope of the claimed idea.

FIG 1 shows the method invented, and
FIG 2 shows the graphical resolution of a distance-measurement, which was made according to the invention.

FIG 1 shows the method invented. A wind turbine WT comprises a tower T, which carries a nacelle N of the wind turbine WT. The nacelle N is connected with a hub H, which carries and rotates the rotor blades B1, B2 and B3.

The hub H and the rotor blades B1, B2 and B3 rotate around an axis of rotation ROT. The axis ROT is inclined by some degrees from a horizontal axis to avoid that turning blades Bx hit the tower T if they are bent by wind forces towards the tower T.

A laser range line measurement device MD is positioned in front of the tower T in a way that a measurement field MF is established between the measurement device MD and the exterior wall EW of the tower T.

The measurement field MF comprises a region REG. Each tip end of the turning blades B1, B2 and B3 passes the tower T along a line of sight LOS within the region REG.

Thus the measurement field MF is positioned in a vertical manner along to the longitudinal axis of the tower T. The measurement field MF comprises the region REG, wherein the tip ends of the turning blades Bx are passing.

If no-one of the blades B1, B2 and B3 is present in front of the tower T the distance between the measurement device MD and the exterior wall of the tower T is measured as distance 1.

If blades are present in front of the tower T the distance between the measurement device MD and the tip end of the respective blade is measured as distance 2.

Both distances are subtracted to get the needed "tip-to-tower-distance".

FIG 1 shows two different tip-to-tower-distances caused by different blade deflections.

For example blade B1 shows a small blade-deflection and thus a wide tip-to-tower-distance, while blade B2 shows a larger blade-deflection and thus a smaller tip to tower distance compared with blade B1.

For the blade B2 a first distance "distance 1" is measured between the measurement device MD and the exterior wall of the tower T, if the tip end of the blade B2 is not within the region REG.

A second distance "distance 2" is measured between the measurement device MD and the tip end of the blade B2, as long as the tip end of the blade B2 is within the region REG.

Finally the needed tip to tower distance is calculated by subtracting the distances:

$$\text{tip to tower distance} = \text{distance 1} - \text{distance 2}.$$

FIG 2 shows the graphical resolution of a measurement, which is used according to the invention.

The horizontal axis shows the distance between the object being measured and the measurement device in degrees or meters. Thus an optical line of sight is established by this axis.

The vertical axis shows the measured tip-to-tower-distances, i.e. measured in meters.

In this figure the line segment S1 shows the tip-to-tower-distance.

As the distance to the tower T is measured while the respective blade passes the tower and thus the measurement region

REG even the geometry of the passing blade can be resolved easily.

The line segment S2 shows the situation, wherein the blade is not present within the region REG.

The line segment S3 shows the situation, wherein the blade is present within the measurement region REG.

A compensation value for the known blade tip thickness may be used to result in an optimum precision of the determined tip-to-tower-distance.

For optimum measurements the laser range measurement device MD is positioned in a perfect upwind position in reference to the tower T.

Possible positions of the measurement device MD are located on the ground and in an upwind-direction from the tower T and in a plane, which is defined by the longitudinal axis (orientation) of the nacelle and its hub (i.e. the orientation of the main shaft in the nacelle could be used, too) and which is defined by the longitudinal axis of the tower T.

## Claims

**1.** Method to determine a distance between an exterior wall of a wind turbine tower (T) and a tip end of a wind turbine blade (Bx),

- wherein a laser range line measurement device (MD) is positioned in front of the tower (T) in a way that a measurement field (MF) for distance measurements is established between the measurement device (MD) and the exterior wall of the tower (T),
- wherein the tip end of the blade (T), which rotates with the hub around a rotational axis, passes the measurement field (MF) in a region (REG),
- wherein a first distance is measured, which defines the distance between the measurement device (MD) and the exterior wall of the tower (T),
- wherein a second distance is measured, which defines the distance between the measurement device (MD) and the tip end of the blade (T), and
- wherein the distance between the exterior wall of the tower (T) and the tip end of the blade (Bx) is calculated by subtracting the measured distances.

**2.** Method according claim 1, wherein the measurement field (MF) is positioned vertically along the tower (T).

**3.** Method according claim 1,

- wherein the laser range line measurement device (MD) is positioned on the ground and in an upwind position in reference to the tower (T) and the turning blade, and
- wherein the laser range line measurement device (MD) is positioned in a plane, which is defined by the longitudinal axis of the nacelle and the hub of the wind turbine and which is defined by the longitudinal axis of the tower (T).

**4.** Method according claim 1, wherein the distance measurements are carried out by a number of laser range line measurement devices, which are arranged on a line.

**5.** Method according claim 1,

- wherein the second distance is measured with a predetermined resolution and as long as the tip end of the blade passes the region (REG), and
- wherein the predetermined resolution is chosen in a way that the blade-geometry is derivable from the distance measurements.

**6.** Method according claim 4, wherein the blade-geometry, which is derived from the measurements, is evaluated to detect blade-damages, being originated by lightning strikes or hail or icing or rain or the like.

**7.** Method according claim 4, wherein the blade-geometry, which is derived from the measurements, is evaluated to detect blade geometries, which contribute to noise emissions.

**8.** Method according claim 4, wherein the blade-geometry, which is derived from the measurements, is evaluated to detect tower shadow blade deflections.

**9.** Method according claim 1,

- wherein the second distance is measured with a predetermined resolution and as long as the tip end of the blade passes the region (REG), and
- wherein the predetermined resolution is chosen in a way that the pitch angle of the rotating blade is derivable from the distance measurements and from the known geometry of the blade.

FIG 1
B3
ROT
WT
H
N
SMALL DEFLECTION
LARGE DEFLECTION
B2
B1
T
REG
MF
distance measurement; LOS
Laser range line
measurement device
distance MD → tip end of B2 ≙ distance 2
MD
EW
distance MD → tower wall ≙ distance 1

FIG 2
Blade NOT present.
Distance=distance to tower
S2
Blade tip
Tip to tower distance
S1
Blade present.
Distance=distance to blade
S3

# EUROPEAN SEARCH REPORT

Application Number
EP 13 19 2881

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | DE 10 2010 024532 A1 (WINDCOMP GMBH [DE]) 22 December 2011 (2011-12-22)<br>* paragraph [0030] - paragraph [0035] *<br>* paragraph [0048] - paragraph [0052] *<br>* paragraph [0060] - paragraph [0062] *<br>* figures 2,9,10 *<br>----- | 1-8<br><br>9 | INV.<br>F03D11/00 |
| Y | DE 100 32 314 C1 (WOBBEN ALOYS [DE]) 13 December 2001 (2001-12-13)<br>* abstract *<br>* paragraph [0014] - paragraph [0016] *<br>* figures 1,2 *<br>----- | 9 | |
| X | DE 10 2011 112627 A1 (BOSCH GMBH ROBERT [DE]) 7 March 2013 (2013-03-07)<br>* abstract *<br>* paragraph [0011] - paragraph [0016] *<br>* paragraph [0022] - paragraph [0024] *<br>* paragraph [0031] - paragraph [0034] *<br>* paragraph [0046] *<br>* paragraph [0050] - paragraph [0051] *<br>----- | 1-8 | TECHNICAL FIELDS SEARCHED (IPC) |
| A | DE 10 2006 054667 A1 (LUCKS CHRISTOPH [DE] WINDCOMP GMBH [DE]) 21 May 2008 (2008-05-21)<br>* abstract *<br>* paragraph [0007] *<br>* paragraph [0013] *<br>* paragraph [0028] - paragraph [0029] *<br>* paragraph [0033] - paragraph [0036] *<br>* figure 1 *<br>-----<br>-/-- | 1-9 | F03D |

1

The present search report has been drawn up for all claims

| Place of search | Date of completion of the search | Examiner |
|---|---|---|
| The Hague | 20 March 2014 | Westermayer, Philipp |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches
Patentamt
European
Patent Office
Office européen
des brevets

# EUROPEAN SEARCH REPORT

Application Number
EP 13 19 2881

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 511 523 A1 (BAUMER INNOTEC AG [CH]) 17 October 2012 (2012-10-17)<br>* abstract *<br>* paragraph [0013] - paragraph [0015] *<br>* paragraph [0025] - paragraph [0028] *<br>* paragraph [0034] *<br>* paragraph [0038] - paragraph [0048] *<br>* figure 1 *<br>----- | 1-9 | |
| A | JP 2010 229824 A (TOKYO ELECTRIC POWER CO) 14 October 2010 (2010-10-14)<br>* abstract; figures 1-4 *<br>* the whole document *<br>----- | 1-9 | |

TECHNICAL FIELDS SEARCHED (IPC)

The present search report has been drawn up for all claims

1

| Place of search | Date of completion of the search | Examiner |
|---|---|---|
| The Hague | 20 March 2014 | Westermayer, Philipp |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 13 19 2881

This annex lists the patent family members relating to the patent documents cited in the above-mentioned European search report. The members are as contained in the European Patent Office EDP file on
The European Patent Office is in no way liable for these particulars which are merely given for the purpose of information.

20-03-2014

| Patent document cited in search report | Publication date | Patent family member(s) | Publication date |
|---|---|---|---|
| DE 102010024532 A1 | 22-12-2011 | DE 102010024532 A1 | 22-12-2011 |
| | | EP 2582970 A1 | 24-04-2013 |
| | | WO 2011161058 A1 | 29-12-2011 |
| DE 10032314 C1 | 13-12-2001 | AT 376622 T | 15-11-2007 |
| | | AU 6226401 A | 14-01-2002 |
| | | AU 2001262264 B2 | 13-01-2005 |
| | | BR 0112171 A | 06-05-2003 |
| | | CA 2414645 A1 | 30-12-2002 |
| | | CY 1107093 T1 | 24-10-2012 |
| | | DE 10032314 C1 | 13-12-2001 |
| | | DK 1301707 T3 | 28-01-2008 |
| | | EP 1301707 A1 | 16-04-2003 |
| | | ES 2293995 T3 | 01-04-2008 |
| | | JP 4070595 B2 | 02-04-2008 |
| | | JP 2004502091 A | 22-01-2004 |
| | | KR 20030020306 A | 08-03-2003 |
| | | PT 1301707 E | 08-11-2007 |
| | | US 2004013524 A1 | 22-01-2004 |
| | | WO 0202936 A1 | 10-01-2002 |
| DE 102011112627 A1 | 07-03-2013 | NONE | |
| DE 102006054667 A1 | 21-05-2008 | CN 101622447 A | 06-01-2010 |
| | | DE 102006054667 A1 | 21-05-2008 |
| | | EP 1994280 A2 | 26-11-2008 |
| | | US 2010084864 A1 | 08-04-2010 |
| | | WO 2008058876 A2 | 22-05-2008 |
| EP 2511523 A1 | 17-10-2012 | NONE | |
| JP 2010229824 A | 14-10-2010 | NONE | |

EPO FORM P0459

For more details about this annex : see Official Journal of the European Patent Office, No. 12/82